# DEMANDE DE BREVET EUROPEEN

(11) **EP 1 155 947 A1**
(43) Date de publication de la demande: **21.11.2001**
(21) Numéro de dépôt: 00500093.0
(22) Date de dépôt: 16.05.2000
(51) Int. Cl.: B62H 1/06, B62H 5/14, B62H 5/00

(54) **Système de stationnement et de blocage pour bicyclettes ou autres**

(71) Demandeur: Orbea, S. Coop. Ltda., 48269 Mallabia (Vizcaya) (IT)
(72) Inventeur: Esnal Olasagasti, Igor, 20018 Lasarte-Oria (Guipuzcoa) (ES)
(74) Mandataire: Urizar Barandiaran, Miguel Angel

(57) **Abrégé**

Système de stationnement et de blocage pour bicyclettes ou autres, qui dispose sur une tubulure (t₁) du cadre du cycle d'un dispositif de stationnement et en relation avec une autre tubulure (t₂) du cadre du cycle, comporte un dispositif de blocage, les deux avec des mécanismes (31) posés sur une tubulure (t₃) du cadre du cycle pour agir séparément sur les dispositifs de stationnement et de blocage de sorte que la position dépliée corresponde de façon synchronisée à celle du cliquet enclenché.

Pour application combinée comme stabilisateur ou appui et blocage antivol de bicyclettes, cycles et autres.

## Description

La présente invention est un système de stationnement et de blocage pour bicyclettes ou autres.

Le système, objet de l'invention, remplace avantageusement les dispositifs antivol et les dispositifs de soutien que requièrent actuellement les bicyclettes (et en général, les cyclomoteurs, les motocyclettes de petite cylindrée structurées sur un cadre ou un châssis à deux roues) pour les garer et les laisser sans surveillance.

La mention «cycle» qui apparaît tout au long de ce dossier se réfère à un type de véhicules à deux roues où l'invention est applicable.

Ces cycles requièrent généralement une béquille, servant de troisième point d'appui quand ils sont garés. De plus, ils ont besoin d'un dispositif antivol pour bloquer au moins le fonctionnement d'une roue.

En général, la béquille/soutien est un système manuel assisté et le dispositif antivol est indépendant du propre cycle.

L'objectif de la présente invention est de doter le cycle d'un dispositif de stationnement et d'un dispositif de blocage, formant une unité inséparable uni au cadre du cycle.

Ces dispositifs de stationnement et de blocage agissent de façon synchronisée, se pliant par rapport au cadre de façon simultanée. Pour les plier ou les déplier, l'usager dispose de mécanismes pouvant être actionnés et bloqués par un système de verrouillage.

Selon le système de stationnement et de blocage pour bicyclettes ou autres, objet de l'invention, par rapport au cadre du cycle, on dispose de:
a) un dispositif de stationnement qui comporte une béquille rétractile, avec deux positions extrêmes par rapport à une tubulure du cadre; une dépliée qui constitue un troisième point d'appui et une autre repliée, cachée dans la propre tubulure du cadre;
b) un dispositif de blocage qui comporte un bras basculant qui peut adopter deux positions extrêmes par rapport à la fourche du cadre; une pliée, située sur un côté de la fourche et une autre dépliée, orthogonale à celui-ci, qui traverse le côté opposé de la fourche sous l'action d'un cliquet, rétractile par des mécanismes par rapport au propre bras basculant;
c) des mécanismes pour agir séparément sur les dispositifs de stationnement et de blocage mentionnés de sorte que la position de «béquille dépliée» corresponde à celle de «cliquet enclenché».

En particulier:
a) le dispositif de stationnement est composé de la béquille rétractile, articulée sur un premier support interne, avec un ressort qui la maintient sur une position dépliée, ce premier support interne étant guidé dans une tubulure du cadre où il se déplace sous l'action d'un tendeur/détendeur qui le relie à un deuxième support interne;
b) le dispositif de blocage est composé du bras basculant, articulé sur un côté de la fourche avec un ressort qui le maintient en position dépliée; étant complété par le cliquet rétractile monté intérieurement sur ce bras basculant pouvant avoir un mouvement linéaire guidé entre deux positions extrêmes et qui se maintient sur une position tendue, rétractable sous l'action d'un tendeur qui le relie au deuxième support interne;
c) les mécanismes mentionnés pour agir séparément sur les dispositifs de stationnement et de blocage sont composés par le deuxième support interne, associé à une tête externe; l'ensemble étant guidé de façon linéaire entre deux positions extrêmes de la tubulure et avec des moyens de blocage par verrouillage sur ces positions.

Pour mieux comprendre l'objet de la présente invention, un exemple de réalisation pratique est représentée sur les plans, susceptible de changements accessoires mais qui ne trahiront pas l'idée de base.

La figure 1 représente une vue générale en élévation d'un cycle qui est équipé du système de stationnement et de blocage selon l'invention.

On a représenté sur cette figure le système en position plié - cycle en position d'utilisation - ses composants tels que les roues (R₁), (R₂), la selle, les pédales, le guidon, etc. sont en pointillés.

Les figures 2 représentent un détail très agrandi sur plan-figure 2a- du dispositif de blocage (2) en position opérationnelle de repos (déplié) et en élévation -figure 2b- et sur plan -figure 2c- les mécanismes pour un fonctionnement séparé en position correspondant à cette situation.

Les figures 3a, 3b, 3c représentent les mêmes détails dans la même position que les figures 2a, 2b, 2c correspondant ici à la position opérationnelle d'utilisation (plié).

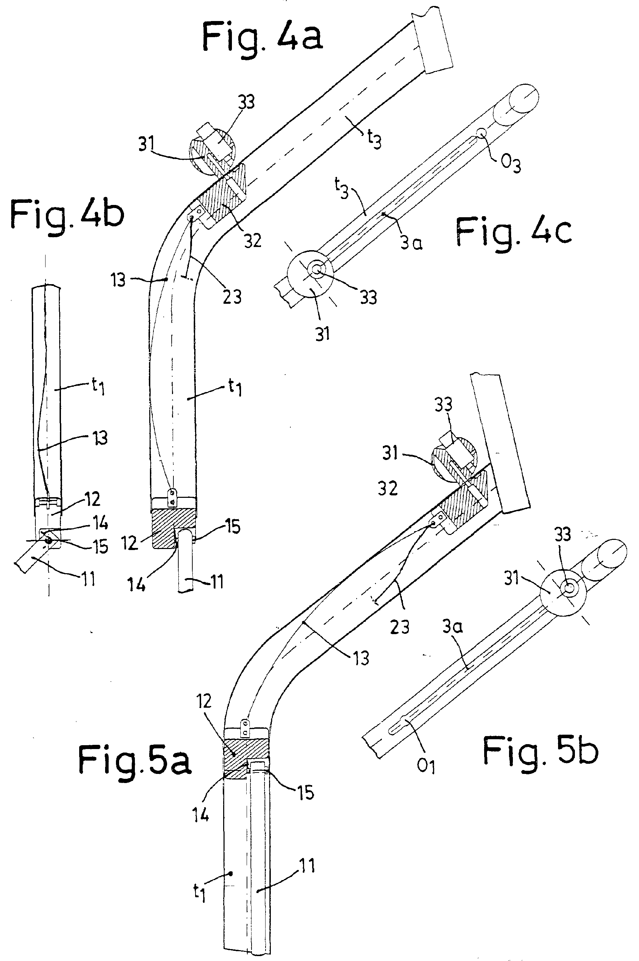

Les figures 4 représentent des détails très agrandis en élévation -figure 4a- du dispositif de stationnement (1) en position opérationnelle de repos (déplié) avec une vue partielle - figure 4b- à 90° par rapport à l'antérieure, pour observer la position de la béquille (1) avec l'action du ressort (14) et une vue sur plan -figure 4c- des mécanismes pour un fonctionnement séparé sur la position correspondant à cette situation.

Les figures 5a et 5b représentent les mêmes détails que les figures 4a, 4c antérieures, correspondant ici à la position opérationnelle d'utilisation.

Voici un exemple de réalisation pratique, non limitative, de la présente invention.

Il s'agit d'un système de stationnement et de blocage pour bicyclettes ou autres, -cycles en général- qui sont composés d'un cadre (C) formé par des tubulures où se trouvent deux roues (R₁), (R₂).

Selon l'invention, on pose par rapport au cadre (C) du cycle un dispositif de stationnement (1) et un dispositif de blocage (2) et de mécanismes (3) pour les actionner de façon séparée et synchronisée.

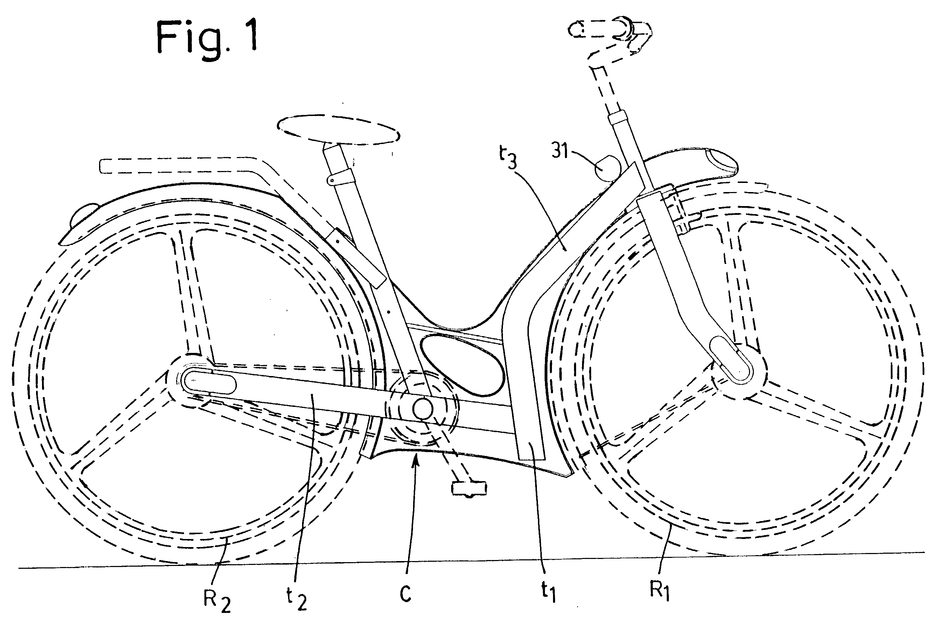

Le dispositif de stationnement (1) est posé -voir figure 1- par rapport à la tubulure (t₁) du cadre (C) dans laquelle il rentre en le pliant.

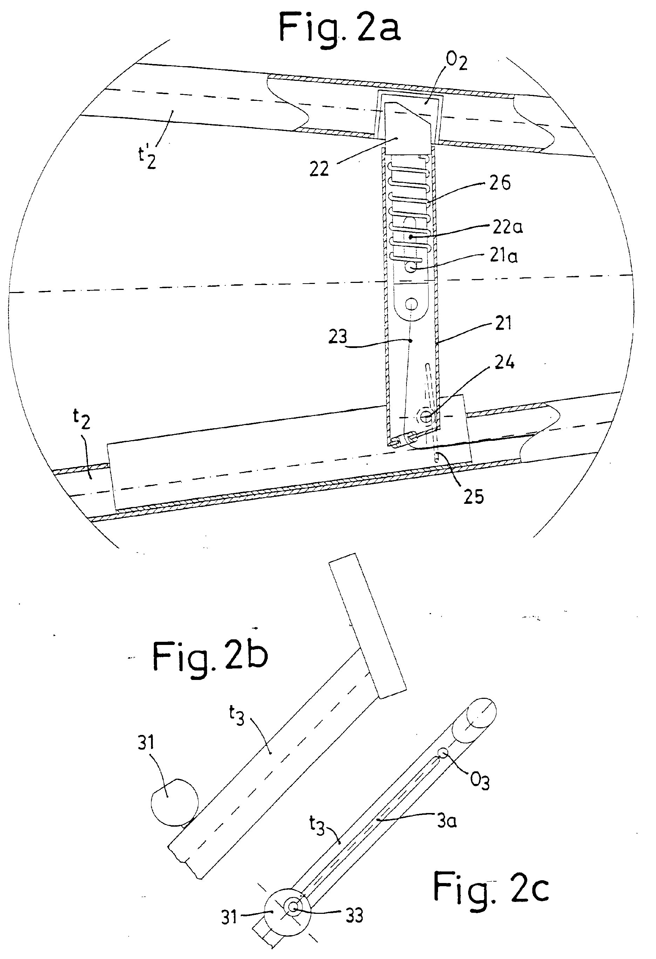

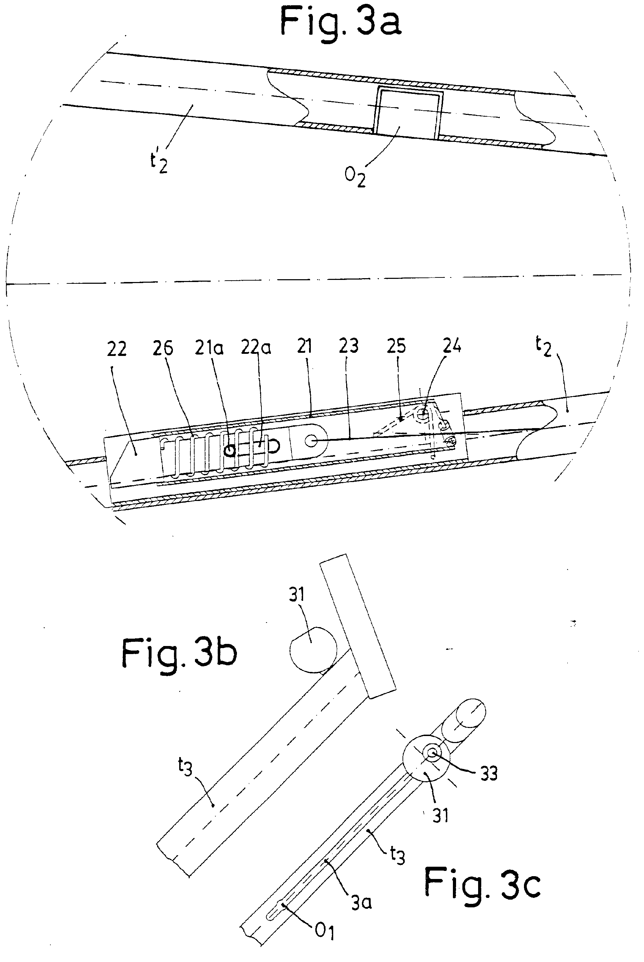

Le dispositif de blocage (2) est posé par rapport aux fourches (t₂) du cadre (C) se pliant contre l'une d'elles (à moitié caché) - voir figure 3a- et formant un angle pratiquement orthogonal sur les deux fourches (t₂) et (t'₂) du cadre (C) - voir figure 2a- traversant une des roues (R₂) quand il est utilisé.

Les mécanismes (3) pour utiliser séparément les dispositifs de stationnement (1) et de blocage (2) sont dans une zone tubulaire (t₃) du cadre - voir figure 1, se déplaçant de façon linéaire entre deux positions extrêmes, guidés dans une rainure (3a) formée dans la propre tubulure (t₃).

Pour la réalisation représentée, le dispositif de stationnement (1) est composé de:
- une béquille/appui (11)
- un support interne (12)
- un tendeur/détendeur (13) et
- un ressort (14)

La béquille/appui (11) est articulée (15) sur le support interne (12). Il y a un ressort (14) qui butant contre la béquille (11) et le support (12) les maintient dans une position tournée/dépliée.

Le tendeur/détendeur (13) qui est par exemple une platine ou un feuillard, relie en permanence le support interne (12) à un deuxième support interne (32) appartenant aux mécanismes (3) décrits ci-après.

Pour la réalisation représentée, le dispositif de blocage (2) est composé de:
- un bras (21)
- un cliquet rétractile (22) et
- un tendeur (23)

Le bras (21) est articulé sur (24) sur une fourche (t₂) du cadre. Cette fourche (t₂) est ouverte latéralement. Il y a un ressort (25) qui en butant contre la fourche (t₂) et le bras (21) les maintient dans une position tournée/dépliée.

Le cliquet (22) se trouve à l'intérieur du bras (21) où il est guidé par exemple par une rainure (22a) où se déplace un axe (21a) entre les deux extrémités, formé par la rainure (22 a) du cliquet (22) et la tige (21a) du bras (21) ou vice versa.

Le cliquet (22) est muni d'un tendeur (23) et se maintient en position dépliée sous l'action d'un ressort (26) -voir figure 2a-.

Le tendeur (23) qui est par exemple un câble de traction relie en permanence le cliquet (22) et le support interne (32) appartenant aux mécanismes (3) qui sont décrits ci-après.

Pour la réalisation représentée, les mécanismes (3) pour actionner séparément les dispositifs de stationnement (1) et de blocage sont les suivants:
- une tête externe (31)
- un support interne (32)
- un système de blocage (33) et
- une rainure de guidage (3a).

La rainure de guidage (3a) est formée dans la tubulure correspondante (t₃) du cadre (C). La tête externe (31) et le support interne (32) sont reliés par cette rainure de guidage (3a) où ils se déplacent. La fermeture (33) sur la tête (31) bloque l'ensemble sur une position extrême introduisant le verrou dans un orifice (O₁) en face, dans l'axe et dans la rainure de guidage (3a).

La longueur de la rainure de guidage (3a) est telle que la position décrite correspond à la position du bras (21) déplié et la partie saillante du cliquet (22) logé dans un orifice (0₂) de la fourche (t'₂) et avec la position de béquille/appui (11) dépliée.

Pour avoir la position pliée, il suffit de débloquer la fermeture (33) et de déplacer l'ensemble (3) - tête externe (31) et support interne (32) jusqu'à l'extrémité opposée de la rainure (3a) qui se maintient avec le verrou de la fermeture (33) introduit dans l'orifice (0₁) en face, dans l'axe de la rainure de guidage (3a). Dans cette position, tout l'ensemble de stationnement (1)- béquille (11), support interne (12) et ressort (14) est logé dans la tubulure (t1) du cadre et tout l'ensemble de blocage (2) - bras (21), cliquet (22) et accessoires est replié, à moitié caché, contre la fourche (t₂).

## Revendications

1. Système de stationnement et de blocage pour bicyclettes ou autres, qui est **caractérisé par le fait qu'**il y a sur le cadre du cycle:
a) un dispositif de stationnement et de blocage avec une béquille rétractile qui peut adopter deux positions extrêmes par rapport à un tubulure du cadre; une, dépliée, servant de troisième point d'appui et une autre repliée, cachée dans la tubulure du cadre;
b) un dispositif de blocage qui comporte un bras basculant qui peut adopter deux positions extrêmes par rapport à la fourche du cadre; une pliée, contre un côté de la fourche et une autre dépliée, orthogonal à celui-ci, qui traverse le côté opposé de la fourche sous l'action d'un cliquet, rétractile par des mécanismes par rapport au propre bras basculant;
c) des mécanismes pour agir séparément sur les dispositifs de stationnement et de blocage mentionnés de sorte que la position de «béquille dépliée» corresponde à celle de «cliquet enclenché»

2. Système de stationnement et de blocage pour bicyclettes ou autres, selon revendication antérieure, **caractérisé par le fait que** ce dispositif de stationnement est constitué par une béquille rétractile, articulée sur un premier support interne avec un ressort qui la maintient sur une position dépliée; ce premier support interne étant guidé dans une tubulure du cadre où il se déplace sous l'action d'un tendeur/détendeur qui le relie au deuxième support interne.

3. Système de stationnement et de blocage pour bicyclettes ou autres, selon revendication antérieure, **caractérisé par le fait que** ce dispositif de blocage est constitué par un bras basculant, articulé sur un côté de la fourche avec un ressort qui le maintient en position dépliée; le dispositif de blocage est composé du bras basculant, articulé sur un côté de la fourche avec un ressort qui le maintient en position dépliée; étant complété par le cliquet rétractile monté intérieurement sur ce bras basculant pouvant avoir un mouvement linéaire guidé entre deux positions extrêmes et qui se maintient sur une position tendue, rétractable sous l'action d'un tendeur qui le relie au deuxième support interne;

4. Système de stationnement et de blocage pour bicyclettes ou autres, selon revendication antérieure, **caractérisé par le fait que** les mécanismes mentionnés pour agir séparément sur les dispositifs de stationnement et de blocage sont composés par le deuxième support interne, associé à une tête externe; l'ensemble étant guidé de façon linéaire entre deux positions extrêmes de la tubulure et avec des moyens de blocage par verrouillage sur ces positions.
